# EUROPÄISCHE PATENTANMELDUNG

(11) **EP 0 893 711 A2**
(43) Veröffentlichungstag der Anmeldung: **27.01.1999**
(21) Anmeldenummer: 98112176.7
(22) Anmeldetag: 01.07.1998
(51) Int. Cl.: G02B 6/12

(54) **Streifenbelasteter optischer Wellenleiter**

(30) Priorität: 25.07.1997 DE 19732180
(71) Anmelder: SIEMENS AKTIENGESELLSCHAFT, 80333 München (DE)
(72) Erfinder: Buck, Martin, 81243 München (DE)

(57) **Zusammenfassung**

Die Erfindung betrifft einen streifenbelasteten, optischen Wellenleiter (4), bei dem auf einem Halbleiterkörper (1) der Wellenleiter (4) aus einer dielektrischen Schicht (2) und einem Metallstreifen (3) vorgesehen ist, und bei dem die Einkopplung des Lichts in den optischen Wellenleiter (4) über einen Laser oder eine Glasfaserleitung (7) erfolgt.

Dem Laser (7) bzw. der Glasfaserleitung ist eine als Spiegel wirkende Ätzflanke (10) in der dielektrischen Schicht (2) nachgeschaltet.

## Beschreibung

Die vorliegende Erfindung betrifft einen streifenbelasteten optischen Wellenleiter, bei dem auf einem Halbleiterkörper der Wellenleiter aus einer dielektrischen Schicht und einem Metallstreifen vorgesehen ist, und bei dem die Einkopplung des Lichts in den Wellenleiter über einen Laser oder eine Glasfaserleitung erfolgt.

Um möglichst große Schaltgeschwindigkeiten zu erzielen, werden bekanntlich in digitalen Schaltungen immer höhere Betriebsfrequenzen der zu übertragenden Signale verwendet. Solche hohen Betriebsfrequenzen verursachen aber zwangsläufig Kopplungen und Rauschprozesse zwischen benachbarten Leitungen und Bauelementen. Diese Kopplungen und Rauschprozesse können dabei so weit gehen, daß sie den Betrieb des im Halbleiterkörper realisierten digitalen Schaltkreises beeinträchtigen oder zumindest erheblich stören.

Um die bei solchen Rauschprozessen und Kopplungen damit auftretenden Störungen zu verhindern oder wenigstens zu verringern, werden digitale Schaltkreise möglichst so entworfen, daß sie unempfindlich gegen diese Rauschprozesse und Kopplungen sind. Dies kann durch entsprechend geschickt gewählte Führung der Leitungen und Anordnung der Bauelemente oder auch durch Vorsehen bestimmter Mindestabstände geschehen. In jedem Fall tritt aber eine Verringerung der an sich gewünschten hohen Schaltgeschwindigkeit auf.

Aus W. Karthe, Integrierte Optik, Leipzig 1991, Akademische Verlagsgesellschaft Geest u. Portig, S. 58, 59, 64-66, 165-167 ist ein optischer Wellenleiter mit dem Aufbau Halbleiterkörper/dielektrische Schicht/Streifen bekannt.

Es ist daher Aufgabe der vorliegenden Erfindung, einen streifenbelasteten optischen Wellenleiter für digitale Schaltkreise, welche Kopplungen und Rauschprozesse möglichst vermeiden und sich durch eine hohe Schaltgeschwindigkeit auszeichnen, zu schaffen, in welchen Licht auf einfache Weise einkoppelbar ist.

Zur Lösung dieser Aufgabe zeichnet sich ein streifenbelasteter optischer Wellenleiter der eingangs genannten Art erfindungsgemäß dadurch aus, daß dem Laser bzw. der Glasfaserleitung eine als Spiegel wirkende Ätzflanke in der dielektrischen Schicht nachgeschaltet ist.

Die dielektrische Schicht kann dabei aus Siliziumdioxid bestehen. Die Einkopplung des Lichtes in den Wellenleiter kann über eine Glasfaserleitung vorgenommen werden. Eine andere Möglichkeit zur Einkopplung des Lichtes in den Wellenleiter besteht in der Verwendung eines VCSEL (Vertical Cavity Surface Emitting Laser), der in bevorzugter Weise in Flip-Chip-Montage auf der Oberfläche des Halbleiterkörpers angebracht ist. Dabei ist dem VCSEL-Laser eine als Spiegel wirkende Ätzflanke einer Siliziumdioxidschicht nachgeschaltet. Empfangsseitig kann eine Silizium-PIN-Diodenstruktur vorgesehen werden, um das durch die dielektrische Schicht übertragene Signal zu empfangen. In die dielektrische Schicht kann ein als Schalter wirkender optischer Richtkoppler eingebaut sein, der Daten entsprechend seinem Ansteuerungszustand durchläßt oder sperrt.

Die Erfindung benutzt also zur Übertragung von Signalen anstelle Metall-Leitungen einen optischen, streifenbelasteten Wellenleiter.

Die Erfindung benutzt also zur Übertragung von Signalen anstelle Metall-Leitungen einen optischen, streifenbelasteten Wellenleiter.

Nachfolgend wird die Erfindung anhand der Zeichnungen näher erläutert. Es zeigen:
- Fig. 1: eine schematische Ansicht des erfindungsgemäßen streifenbelasteten Wellenleiters in Perspektive und
- Fig. 2: eine schematische Schnittdarstellung durch den Wellenleiter von Fig. 1.

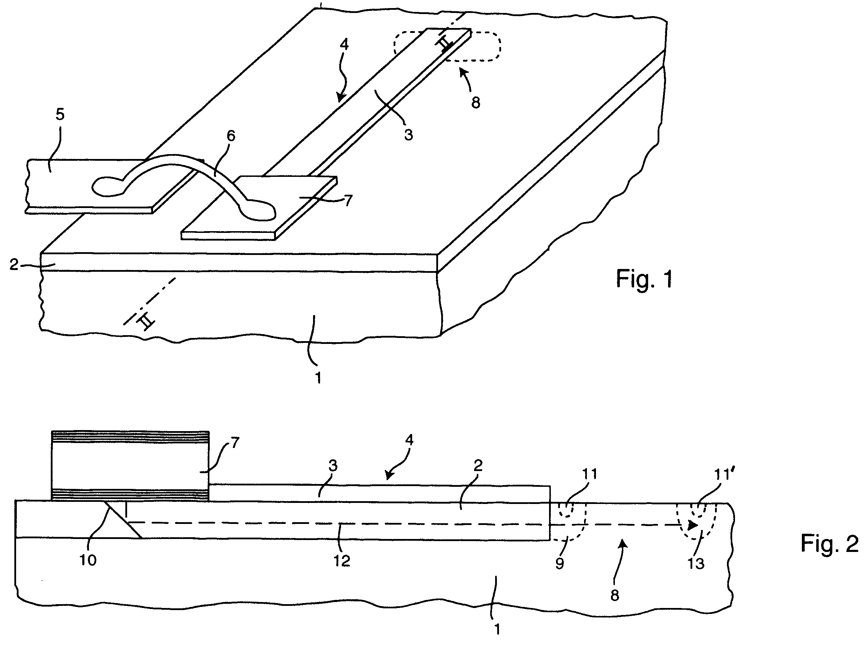

Fig. 1 zeigt einen beispielsweise p-dotierten Halbleiterkörper 1 aus Silizium, auf den eine Siliziumdioxidschicht 2 aufgetragen ist. Auf der Siliziumdioxidschicht 2 befindet sich ein Metallstreifen 3 aus beispielsweise Aluminium, der zusammen mit dem darunter liegenden Bereich der Siliziumdioxidschicht 2 einen streifenbelasteten optischen Wellenleiter 4 bildet. Auf der Oberfläche der Siliziumdioxidschicht 2 ist am Rand des Halbleiterkörpers 1 ein Leiterrahmen 5 gezeigt, von dem zur elektrischen Signalübertragung ein Bonddraht 6 zu einem VCSEL 7 führt. Unterhalb von diesem VCSEL 7 endet der Metallstreifen 3, der von dort zu einer PIN-Diodenstruktur 8 mit einer p-dotierten Zone 9 und einer n-dotierten Zone 13 führt.

Die Fig. 2, in der Schraffuren zur besseren Übersichtlichkeit weggelassen sind, zeigt einen Schnitt II-II durch die Anordnung von Fig. 1. Wie aus der Fig. 2 zu ersehen ist, liegt unterhalb des VCSEL 7 eine Ätzflanke 10, die flach gestaltet ist und als Spiegel für das von dem VCSEL 7 ausgesandte Licht dient.

Im Betrieb wird ein elektrisches Signal über den Leiterrahmen 5 und den Bonddraht 6 dem VCSEL 7 zugeführt und dort in ein optisches Signal umgesetzt. Dieses optische Signal, das von dem VCSEL 7 abgegeben wird, wird an der Ätzflanke 10 der Siliziumdioxidschicht 2 reflektiert, und über diese mittels des streifenbelasteten Wellenleiters 4 unterhalb des zur Wellenführung dienenden Metallstreifens 3 in der Siliziumdioxidschicht 2 zur PIN-Diode 8 übertragen, wo es wieder in ein elektrisches Signal umgesetzt wird. Diese PIN-Diode 8 weist noch p⁺- bzw. n⁺-dotierte Zonen 11 bzw. 11' zur Kontaktgabe zu einem nicht gezeigten elektrischen Leiter auf. Der Lichtübertragungsweg ist dabei schematisch in Fig. 2 durch eine Strichlinie 12 angedeutet.

Der VCSEL 7 ist in bevorzugter Weise in Flip-Chip-Montage auf der Siliziumdioxidschicht 2 angebracht. Anstelle eines solchen Lasers kann aber auch eine einfache Glasfaserleitung zur Einkopplung des Lichtes in den streifenbelasteten optischen Wellenleiter 4 verwendet werden. Siliziumdioxid ist für diesen Wellenleiter ein bevorzugtes Material, da es für einen weiten Frequenzbereich von optischen Wellen transparent ist und ohne weiteres in einem MOS-Prozeß realisiert werden kann. In den Wellenleiter könnte auch beispielsweise ein elektrisch schaltbarer Richtkoppler zum Schalten des optischen Signales eingesetzt werden, so daß dann optische Impulse den Halbleiterkörper verlassen können.

Ein digitaler Schaltkreis mit dem erfindungsgemäßen Wellenleiter ist besonders vorteilhaft, da praktisch keine elektrischen Kopplungen oder durch steile Flanken der Signale verursachte Rauschprozesse auftreten. Er vermag daher ohne Kopplungen und Rauschprozesse eine besonders hohe Schaltgeschwindigkeit zu realisieren.

Das Material für die dielektrische Schicht 2 ist nicht auf Siliziumdioxid begrenzt. Es können auch andere Materialien verwendet werden, die in den gewünschten Wellenlängenbereichen transparent sind. Auch kann an Stelle von Aluminium selbstverständlich anderes Metall oder auch Polysilizium für den Metallstreifen 3 herangezogen werden. Auch kann die Erfindung auch bei bipolaren Schaltungen anstelle von Schaltkreisen in MOS-Technologie eingesetzt werden, obwohl letztere ein bevorzugtes Anwendungsgebiet ist.

## Patentansprüche

1. Streifenbelasteter, optischer Wellenleiter (4), bei dem auf einem Halbleiterkörper (1) der Wellenleiter (4) aus einer dielektrischen Schicht (2) und einem Metallstreifen (3) vorgesehen ist, und bei dem die Einkopplung des Lichts in den optischen Wellenleiter (4) über einen Laser oder eine Glasfaserleitung (7) erfolgt,
**dadurch gekennzeichnet,**
daß dem Laser bzw. der Glasfaserleitung (7) eine als Spiegel wirkende Ätzflanke (10) in der dielektrischen Schicht (2) nachgeschaltet ist.

2. Wellenleiter nach Anspruch 1,
**dadurch gekennzeichnet,**
daß die dielektrische Schicht (2) aus Siliziumdioxid besteht.

3. Wellenleiter nach Anspruch 1 oder 2,
**dadurch gekennzeichnet,**
daß der Laser (7) ein VCSEL-Laser in Flip-Chip-Montage ist.

4. Wellenleiter nach einem der Ansprüche 1 bis 3,
**dadurch gekennzeichnet,**
daß empfangsseitig eine PIN-Photodiodenstruktur (8) vorgesehen ist.

5. Wellenleiter nach einem der Ansprüche 1 bis 4,
**dadurch gekennzeichnet,**
daß ein optischer Richtkoppler in der dielektrischen Schicht vorgesehen ist.
